# EUROPEAN PATENT SPECIFICATION

(11) **EP 4 242 911 B1**
(45) Date of publication and mention of the grant of the patent: **03.06.2026**
(21) Application number: 21888156.3
(22) Date of filing: 17.06.2021
(51) Int. Cl.: G05D 1/243, G06T 7/70, A47L 11/40, A47L 11/24, A47L 23/20, A47L 9/28, G05D 1/246, G05D 1/644, G05D 1/689, G05D 105/10, G05D 107/40, G05D 109/10, G05D 111/10, G06V 20/58

(54) **OBSTACLE RECOGNITION METHOD AND APPARATUS AND COMPUTER-READABLE STORAGE MEDIUM**
HINDERNISERKENNUNGSVERFAHREN UND -VORRICHTUNG UND COMPUTERLESBARES SPEICHERMEDIUM
PROCÉDÉ ET APPAREIL DE RECONNAISSANCE D'OBSTACLE ET SUPPORT DE STOCKAGE LISIBLE PAR ORDINATEUR

(30) Priority: 06.11.2020 CN 202011228693
(43) Date of publication of application: 13.09.2023
(73) Proprietor: Beijing Roborock Innovation Technology Co., Ltd., Beijing 102206 (CN)
(72) Inventor: HOU, Zhengtao, Beijing 102206 (CN)
(74) Representative: Cabinet Beau de Loménie
(86) International application number: PCT/CN2021/100714
(87) International publication number: WO 2022/095453

(56) References cited:
- CN-A- 108 445 878
- CN-A- 109 645 892
- CN-A- 110 315 538
- CN-A- 110 622 085
- CN-A- 111 481 105
- CN-A- 111 481 105
- CN-A- 112 380 942
- US-A1- 2020 150 692
- US-A1- 2021 182 579
- US-A1- 2023 225 576
- MCGREAVY CHRISTOPHER ET AL: "Edinburgh Research Explorer", 16 January 2017 (2017-01-16), XP093278384, Retrieved from the Internet <URL:https://www.research.ed.ac.uk/en/publications/next-best-view-planning-for-object-recognition-in-mobile-robotics>

## Description

### TECHNICAL FIELD

The present disclosure relates to the field of robots, and in particular to a method and apparatus for identifying an obstacle, a medium and an electronic device.

### BACKGROUND

A walking robot feeds ground conditions back to a computer through a sensor or a camera, the computer makes a judgment based on the ground conditions, and then the walking robot stably walks forwards, backwards, leftwards or rightwards. For example, a sweeping robot, also known as an automatic cleaning robot, a smart vacuum cleaner, a robot vacuum cleaner or the like, is a smart home device capable of automatically cleaning the ground, and can complete sweeping the floor in a room automatically by virtue of artificial intelligence.

At present, the walking robot has very limited ability to identify obstacles through the camera, and often misidentifies or fails to identify some obstacles (such as pet feces) due to their different shapes. If the sweeping robot misidentifies the pet feces, there will be a large area not swept; and if the sweeping robot fails to identify the pet feces, the pet feces may be smeared to clean regions, resulting in extremely poor user experience.

The following documents are prior art of the present disclosure:
- Chinese Patent Application Publication No. CN111481105A, disclosing obstacle avoidance method for a self-moving robot;
- US Patent Application Publication No. US 2020/150692 A1, disclosing a method and apparatus for acquiring data; and
- Chinese Patent Application Publication No. CN110622085A, disclosing a mobile robot, a control method and control system of the mobile robot.

### SUMMARY

This section of Summary is provided to introduce the concepts in a simplified form that are described in detail in the section of Detailed Description. This section of Summary is not intended to define key features or essential features of the claimed technical solutions, nor is it intended to be used to limit the scope of the claimed technical solutions. The invention is defined by the appended claims.

The present disclosure aims to provide a method and apparatus for identifying an obstacle, a medium and an electronic device, which can solve at least one of the technical problems mentioned above. Specific solutions are as follows.

According to specific embodiments of the present disclosure, in a first aspect, the present disclosure provides a method for identifying an obstacle, including: acquiring current identification feature information of the obstacle in a process of identifying the obstacle; bypassing to at least one position around the obstacle when the current identification feature information does not satisfy an identification condition, and acquiring identification feature information of the obstacle at each position correspondingly; and determining a target type of the obstacle based on all identification feature information of the obstacle.

The identification feature information at least includes an obstacle type; and bypassing to the at least one position around the obstacle when the current identification feature information does not satisfy the identification condition includes: acquiring a current position of the obstacle; acquiring an marked obstacle type corresponding to the current position by querying an environment map based on the current position; and bypassing to the at least one position around the obstacle when the marked obstacle type does not match a current obstacle type.

Optionally, the identification feature information further includes a confidence value of the obstacle type; and bypassing to the at least one position around the obstacle when the current identification feature information does not satisfy the identification condition includes: bypassing to the at least one position around the obstacle when a confidence value of the current obstacle type is less than a preset confidence threshold.

Determining the target type of the obstacle based on the all identification feature information of the obstacle includes: acquiring a statistical value of each obstacle type by performing classification statistics on all obstacle types of the obstacle; and determining an obstacle type corresponding to a maximum statistical value as the target type.

Optionally, determining the target type of the obstacle based on the all identification feature information of the obstacle includes: acquiring a first obstacle type with the confidence value greater than or equal to the preset confidence threshold by screening all confidence values of the obstacle; acquiring a statistical value of each first obstacle type by performing classification statistics on all first obstacle types; and determining a first obstacle type corresponding to a maximum statistical value as the target type.

Optionally, after determining the target type of the obstacle, the method further includes: determining the marked obstacle type as misidentification information when the marked obstacle type does not match the current obstacle type.

Optionally, the method further includes: collecting actual region information of the obstacle when bypassing the obstacle; and after determining the marked obstacle type as the misidentification information, the method further includes: transmitting the target type and the actual region information to the environment map.

According to specific embodiments of the present disclosure, in a second aspect, the present disclosure provides an apparatus for identifying an obstacle, including: an acquisition unit, configured to acquire current identification feature information of the obstacle in a process of identifying the obstacle; a bypassing unit, configured to bypass to at least one position around the obstacle when the current identification feature information does not satisfy an identification condition, and acquire identification feature information of the obstacle at each position correspondingly; and a determination unit, configured to determine a target type of the obstacle based on all identification feature information of the obstacle.

The identification feature information at least includes an obstacle type; and the bypassing unit includes: a current position acquisition sub-unit configured to acquire a current position of the obstacle; a query sub-unit configured to acquire a marked obstacle type corresponding to the current position by querying an environment map based on the current position; and a first bypassing sub-unit configured to bypass to the at least one position around the obstacle when the marked obstacle type does not match a current obstacle type.

Optionally, the identification feature information further includes a confidence value of the obstacle type; and the bypassing unit includes: a second bypassing sub-unit configured to bypass to the at least one position around the obstacle when a confidence value of the current obstacle type is less than a preset confidence threshold.

The determination unit includes: a first statistical sub-unit configured to acquire a statistical value of each obstacle type by performing classification statistics on all obstacle types of the obstacle; and a first target type determination sub-unit configured to determine an obstacle type corresponding to a maximum statistical value as the target type.

Optionally, the determination unit includes: a screening sub-unit configured to acquire a first obstacle type with the confidence value greater than or equal to the preset confidence threshold by screening all confidence values of the obstacle; a second statistical sub-unit configured to acquire a statistical value of each first obstacle type by performing classification statistics on all first obstacle types; and a second target type determination sub-unit configured to determine a first obstacle type corresponding to a maximum statistical value as the target type.

Optionally, the apparatus further includes: a marking unit configured to determine the marked obstacle type as misidentification information when the marked obstacle type does not match the current obstacle type.

Optionally, the apparatus further includes: a region information collection unit configured to collect actual region information of the obstacle when bypassing the obstacle; and a transmission unit configured to transmit the target type and the actual region information to the environment map after the marked obstacle type is determined as the misidentification information.

According to specific embodiments of the present disclosure, in a third aspect, the present disclosure provides a computer-readable storage medium, storing a computer program thereon, where the program, when executed by a processor, implements the method for identifying the obstacle according to any one of the first aspect.

According to specific non-claimed embodiments of the present disclosure, in a fourth aspect, the present disclosure provides an electronic device. The electronic device includes: one or more processors; and a storage apparatus configured to store one or more programs, where the one or more programs, when executed by the one or more processors, enables the one or more processors to implement the method for identifying the obstacle according to any one of the first aspect.

Compared with the related art, the above solutions of the embodiments of the present disclosure have at least the following benefits.

The present disclosure provides a method and apparatus for identifying the obstacle, a medium and a non-claimed electronic device. The present disclosure identifies the obstacle, bypasses the obstacle if the identification feature information does not satisfy the identification condition, continues to collect identification feature information of the current obstacle at multiple positions, and determines the target type of the obstacle based on all the identification feature information. Thus, the misidentification rate is reduced, and the identification reliability is improved, thereby avoiding misjudgment or judgment failure.

### BRIEF DESCRIPTION OF THE DRAWINGS

The above and other features, advantages and aspects of various embodiments of the present disclosure will become more apparent with reference to accompanying drawings and the following specific embodiments. The same or similar reference signs indicate the same or similar elements throughout the accompanying drawings. It should be understood that the accompanying drawings are exemplary and the components and elements are not necessarily drawn to scale. In the accompanying drawings:
FIG. 1 shows a flowchart of a method for identifying an obstacle according to an embodiment of the present disclosure;
FIG. 2 is a schematic diagram showing that a current obstacle is bypassed in the method for identifying the obstacle according to the embodiment of the present disclosure;
FIG. 3 shows a unit block diagram of an apparatus for identifying an obstacle according to an embodiment of the present disclosure; and
FIG. 4 shows a schematic diagram of a connection structure of an electronic device according to an embodiment the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for more thorough and complete understanding of the present disclosure. It should be understood that the accompanying drawings and embodiments of the present disclosure are merely provided for the purpose of illustration, and are not intended to limit the scope of protection of the present disclosure.

It should be understood that various steps described in the method embodiment of the present disclosure may be performed in different orders and/or in parallel. In addition, the method embodiment may include an additional step and/or omit implementation of an illustrated step. The scope of the present disclosure is not limited in this regard.

The term "include" and variations thereof used herein are open-ended inclusions, i.e., "include(s) but are/is not limited to". The term "based on" refers to "at least partially based on". The term "one embodiment" means "at least one embodiment". The term "another embodiment" means "at least one additional embodiment". The term "some embodiments" means "at least some embodiments". Relevant definitions of other terms will be given in the following description.

It should be noted that concepts such as "first" and "second" mentioned in the present disclosure are merely used to distinguish different apparatuses, modules or units, rather than limit an order or interdependence of functions executed by these apparatuses, modules or units.

It should be noted that "a/an" and "a plurality" mentioned in the present disclosure are illustrative and not restrictive, and those skilled in the art should understand that unless otherwise indicated clearly in the context, they should be understood as "one or more".

In the embodiments of the present disclosure, names of messages or information exchanged among a plurality of apparatuses are only for purpose of illustration, and are not intended to limit the scope of these messages or information.

Optional embodiments of the present disclosure are described in detail below with reference to the accompanying drawings.

The present disclosure provides a first embodiment, i.e., an embodiment of a method for identifying an obstacle.

A walking robot (such as a sweeping robot) has limited ability to identify obstacles through a camera, and often misidentifies or fails to identify some obstacles (such as pet feces) due to their different shapes. If the sweeping robot misidentifies the pet feces, there will be a large area not swept; and if the sweeping robot fails to identify the pet feces, the pet feces may be smeared to clean regions. In view of the above problems, an embodiment of the present disclosure provides a method for identifying an obstacle.

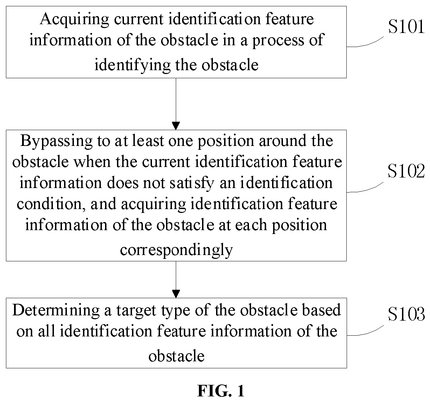

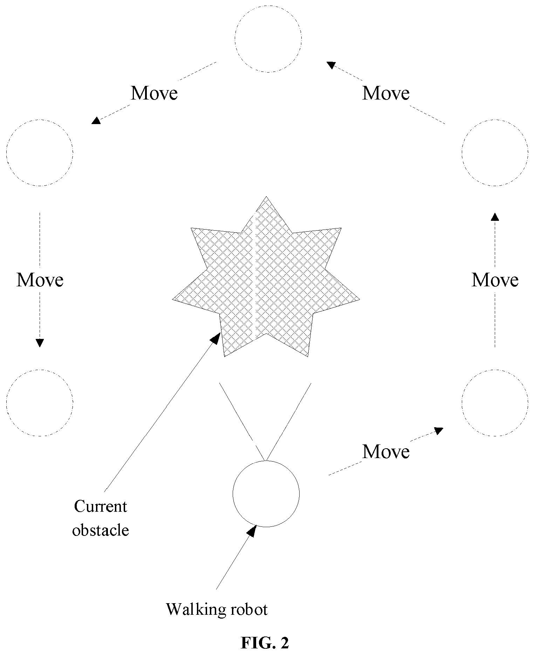

The embodiment of the present disclosure will be described in detail below with reference to FIG. 1 and FIG. 2.

As shown in FIG. 1, in step S101, current identification feature information of the obstacle is acquired in a process of identifying the obstacle.

In the embodiment of the present disclosure, the walking robot collects image information through a camera. When detecting that the obstacle exists within a preset identification range (such as, a range in which the distance from the current obstacle is greater than or equal to 30 cm) during working, the walking robot (such as the sweeping robot) collects information of a current obstacle through the camera and acquires an obstacle type by analyzing the information of the current obstacle.

The identification feature information is a detection result generated by the walking robot based on the information of the current obstacle. The identification feature information includes an obstacle type and a confidence value of the obstacle type. The obstacle type is an identification result for the current obstacle and used to distinguish different obstacles. The obstacle type includes a name of the obstacle. The confidence value is a judgement on the reliability of the acquired obstacle type and usually expressed as a percentage. For example, when the current obstacle is a pot of cactus, the walking robot acquires that the obstacle type is a cactus type and the confidence value is 90% after collecting information of the pot of cactus. However, due to the influences of a shooting angle and a shooting environment, the acquired obstacle type may be a lotus root type and the confidence value is 60%, which may result in misidentification and mis-operations. In the embodiment of the present disclosure, the walking robot is provided with reliability information after judging the current obstacle type through the identification feature information, which prompts the walking robot to further confirm the unreliable obstacle during the walking process, thereby avoiding misidentification and identification failure.

In step S102, bypassing to at least one position around the obstacle is performed when the current identification feature information does not satisfy an identification condition, and identification feature information of the obstacle at each position is correspondingly acquired.

In order to avoid interference of single identification feature information on the identification result, in the embodiment of the present disclosure, when the current identification feature information does not satisfy the identification condition, the walking robot is controlled to acquire the identification feature information of the current obstacle from a plurality of angles and at a plurality of positions around the current obstacle, so as to improve the reliability of the final identification result.

The embodiment of the present disclosure provides two judgment methods for judging whether the current identification feature information satisfies the identification condition or not.

### First judgment method

Bypassing to the at least one position around the obstacle when the current identification feature information does not satisfy the identification condition includes the following steps S102-11, S102-12 and S102-13.

In step S102-11, a current position of the obstacle is acquired.

The current position may be any position or a plurality of positions where the current obstacle is located.

In step S102-12, a marked obstacle type corresponding to the current position is acquired by querying an environment map based on the current position.

The environment map is a digital map displayed on a terminal. Each obstacle in the current environment is digitally marked in the environment map with a digital region occupied by the obstacle and the obstacle type in the digital region. A position in the environment map has a mapping relationship with a position measured in the actual environment. For a position in the actual environment, there is a corresponding position in the environment map. For example, an actual region occupied by walls and furnishings in a room is marked in the environment map with a digital region occupied by walls and furnishings; and an actual region occupied by a temporarily placed item (such as a flowerpot) is marked in the environment map with a digital region occupied by the temporarily placed item.

There is a corresponding position in the environment map for the current position of the current obstacle. If the corresponding position is in a digital region, this digital region is a marked region in the environment map after identifying the obstacle last time by the walking robot, and the marked obstacle type may be acquired through the digital region.

In step S102-13, bypassing to the at least one position around the obstacle is performed, when the marked obstacle type does not match a current obstacle type.

The marked obstacle type not matching the current obstacle type indicates two possibilities: one is that the last identification result may be wrong, that is, the last identification result may be misidentification; and the other is that the obstacle type marked in the first digital region corresponding to the current position is not the same as the current obstacle type, that is, the obstacle at the current position may have changed from the obstacle identified last time, and is not the same type of obstacle. This indicates that misidentification may exist as the current identification result is different from a result marked in the environment map after the last identification.

### Second judgment method

Bypassing to the at least one position around the obstacle when the current identification feature information does not satisfy the identification condition includes the following step S102-21.

In step S102-21, bypassing to the at least one position around the obstacle is performed when a confidence value of the current obstacle type is less than a preset confidence threshold.

The confidence value of the current obstacle type being less than the preset confidence threshold indicates that the current identification is in doubt.

In order to determine the obstacle type of the current obstacle, the reliability of acquiring a target type of the current obstacle is improved. In the embodiment of the present disclosure, the walking robot is controlled to bypass the current obstacle, a plurality of pieces of identification feature information of the current obstacle at the plurality of positions and from the plurality of angles is acquired, and the target type of the current obstacle is determined through the plurality of pieces of identification feature information.

In step S103, the target type of the obstacle is determined based on all identification feature information of the obstacle.

Due to the influence of environmental factors, after information of the obstacle at each position and from each angle is identified, the acquired obstacle types may be different, which affects the confirmation of the target type of the current obstacle. Therefore, in the embodiment of the present disclosure, the target type of the current obstacle is acquired by comprehensively analyzing the all identification feature information of the current obstacle.

Specifically, the following steps S103-11 and S103-12 are included.

In step S103-11, a statistical value of each obstacle type is acquired by performing classification statistics on all obstacle types of the obstacle.

In the embodiment of the present disclosure, the statistical value of each obstacle type is acquired by performing classification statistics on all obstacle types. For example, the obstacle types include the cactus type and the lotus root type, the statistical value of the obstacle type being the cactus type is 18, and the statistical value of the obstacle type being the lotus root type is 2.

In S103-12, the obstacle type corresponding to the maximum statistical value is determined as the target type.

For example, continuing the example above, as the statistical value of the obstacle type being the cactus type is 18, i.e., the maximum statistical value, the cactus type is determined as the target type of the current obstacle.

Further, in order to eliminate interference of ineffective data, determining the target type of the obstacle based on the all identification feature information of the obstacle includes the following steps S103-21, S103-22 and S103-23.

In step S103-21, a first obstacle type with the confidence value greater than or equal to the preset confidence threshold is acquired by screening all confidence values of the obstacle.

By the confidence value being greater than or equal to the preset confidence threshold, the obstacle types with low reliability are eliminated, and the first obstacle type with high reliability is acquired.

In step S103-22, a statistical value of each first obstacle type is acquired by performing classification statistics on all first obstacle types.

In the embodiment of the present disclosure, the statistical value of each obstacle type is acquired by performing classification statistics on all first obstacle types with high reliability. For example, the obstacle types include the cactus type and the lotus root type, the statistical value of the obstacle type being the cactus type is 18, and the statistical value of the obstacle type being the lotus root type is 2.

In step S103-23, the first obstacle type corresponding to the maximum statistical value is determined as the target type.

For example, continuing the example above, as the statistical value of the obstacle type being the cactus type is 18, i.e., the maximum statistical value, the cactus type is determined as the target type of the current obstacle.

Optionally, after the target type of the obstacle is determined, a further step is further included to determine the marked obstacle type as misidentification information when the marked obstacle type does not match the current obstacle type.

In order to keep actual information identical with digital information in the environment map, actual region information of the obstacle is collected when bypassing the obstacle.

Optionally, after the marked obstacle type is determined as misidentification information, a further step is further included to transmit the target type and the actual region information to the environment map.

Thus, a digital region corresponding to the actual region information is drawn in the environment map and the obstacle type of the obstacle is marked in the digital region.

The embodiment of the present disclosure identifies the obstacle, bypasses the obstacle when the identification feature information does not satisfy the identification condition, continues to collect identification feature information of the current obstacle at a plurality of positions, and determines the target type of the obstacle based on all identification feature information. Thus, the misidentification rate is reduced and the identification reliability is improved, thereby avoiding misjudgment or judgment failure.

Corresponding to the first embodiment provided by the present disclosure, the present disclosure further provides a second embodiment, i.e., an apparatus for identifying an obstacle. As the second embodiment is basically similar to the first embodiment, the second embodiment is described relatively simply. For related parts, reference may be made to the corresponding description of the first embodiment. The apparatus embodiment described below is merely exemplary.

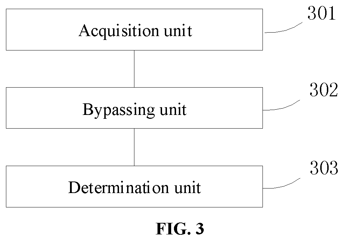

FIG. 3 shows an embodiment of an apparatus for identifying an obstacle provided by the present disclosure.

As shown in FIG 3, the present disclosure provides an apparatus for identifying an obstacle. The apparatus includes an acquisition unit 301, a bypassing unit 302, and a determination unit 303.

The acquisition unit 301 is configured to acquire current identification feature information of the obstacle in a process of identifying the obstacle.

The bypassing unit 302 is configured to bypass to at least one position around the obstacle when the current identification feature information does not satisfy an identification condition, and acquire identification feature information of the obstacle at each position correspondingly.

The determination unit 303 configured to determine a target type of the obstacle based on all identification feature information of the obstacle.

Optionally, the identification feature information at least includes an obstacle type.

The bypassing unit 302 includes a current position acquisition sub-unit, a query sub-unit, and a first bypassing sub-unit.

The current position acquisition sub-unit is configured to acquire a current position of the obstacle.

The query sub-unit is configured to acquire a marked obstacle type corresponding to the current position by querying an environment map based on the current position.

The first bypassing sub-unit is configured to bypass to the at least one position around the obstacle when the marked obstacle type does not match a current obstacle type.

Optionally, the identification feature information further includes a confidence value of the obstacle type.

The bypassing unit 302 includes a second bypassing sub-unit configured to bypass to the at least one position around the obstacle when a confidence value of the current obstacle type is less than a preset confidence threshold.

Optionally, the determination unit 303 includes a first statistical sub-unit and a first target type determination sub-unit.

The first statistical sub-unit is configured to acquire a statistical value of each obstacle type by performing classification statistics on all obstacle types of the obstacle.

The first target type determination sub-unit is configured to determine the obstacle type corresponding to the maximum statistical value as the target type.

Optionally, the determination unit 303 includes a screening sub-unit, a second statistical sub-unit, and a second target type determination sub-unit.

The screening sub-unit is configured to acquire a first obstacle type with the confidence value greater than or equal to the preset confidence threshold by screening all confidence values of the obstacle.

The second statistical sub-unit is configured to acquire a statistical value of each first obstacle type by performing classification statistics on all first obstacle types.

The second target type determination sub-unit is configured to determine the first obstacle type corresponding to the maximum statistical value as the target type.

Optionally, the apparatus further includes a marking unit configured to determine the marked obstacle type as misidentification information when the marked obstacle type does not match the current obstacle type.

Optionally, the apparatus further includes a region information collection unit and a transmission unit.

The region information collection unit is configured to collect actual region information of the obstacle when bypassing the obstacle.

The transmission unit is configured to transmit the target type and the actual region information to the environment map after the marked obstacle type is determined as the misidentification information.

The embodiment of the present disclosure identifies the obstacle, bypasses the obstacle when the identification feature information does not satisfy the identification condition, continues to collect identification feature information of the current obstacle at a plurality of positions, and determines the target type of the obstacle based on all identification feature information. Thus, the misidentification rate is reduced, and the identification reliability is improved, thereby avoiding misjudgment or judgment failure.

A third embodiment of the present disclosure provides an electronic device, used for a method for identifying an obstacle. The electronic device includes at least one processor, and a memory in communication connection with the at least one processor. Among them, the memory stores with instructions executable by the at least one processor. The instructions are executed by the at least one processor to cause the at least one processor to execute the method for identifying an obstacle according to the first embodiment.

A fourth embodiment of the present disclosure provides a computer storage medium for identifying an obstacle. The computer storage medium stores with computer-executable instructions which can implement the method for identifying an obstacle according to the first embodiment.

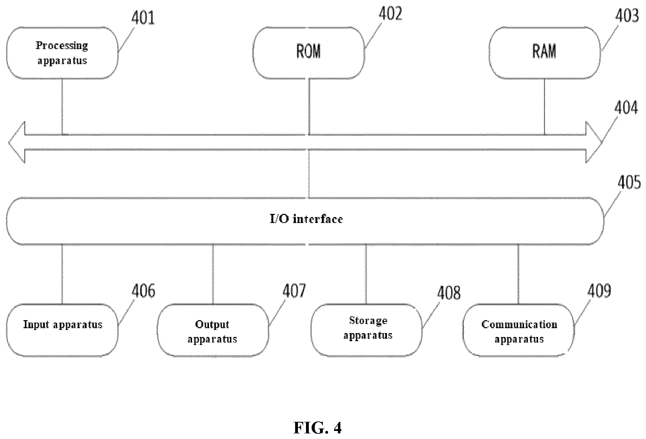

Referring to Fig. 4, it shows a schematic structural diagram of an electronic device suitable for realizing an embodiment of the present disclosure. The electronic device of the present disclosure may include, but is not limited to, a mobile terminal such as a mobile phone, a notebook computer, a digital broadcast receiver, a personal digital assistant (PDA), a PAD (tablet computer), a portable multimedia player (PMP), an onboard terminal (for example, an onboard navigation terminal) and the like, or a fixed terminal such as a digital TV, a desk computer and the like. The electronic device shown in Fig. 4 is only an example, and is not intended to limit the function and application range of the embodiments of the present disclosure.

As shown in Fig. 4, the electronic device may include a processing apparatus 401 (e.g., a central processing unit, a graphics processing unit or the like) which can execute various proper actions and processing according to programs stored in a read-only memory (ROM) 402 or programs loaded into a random-access memory (RAM) 403 from a storage apparatus 408. Various programs and data required for operation of the electronic device are also stored in the RAM 403. The processing apparatus 401, the ROM 402 and the RAM 403 are connected with each other by a bus 404. An input/output (I/O) interface 405 is also connected to the bus 404.

Generally, the following apparatuses may be connected to the I/O interface 405: an input apparatus 406 including, for example, a touch screen, a touchpad, a keyboard, a mouse, a camera, a microphone, an accelerometer, a gyroscope and the like; an output apparatus 407 including, for example, a liquid crystal display (LCD), a speaker, a vibrator and the like; a storage apparatus 408 including, for example, a magnetic tape, a hard disk and the like; and a communication apparatus 409. The communication apparatus 409 can allow the electronic device to carry out wired or wireless communication with other devices so as to exchange data. Although Fig. 4 shows the electronic device with various apparatuses, it should be understood that all shown apparatuses are not required to be implemented or included. More or fewer apparatuses may be alternatively implemented or included.

Particularly, according to the embodiments of the present disclosure, the process described above with reference to the flow chart may be implemented as a computer software program. For example, a computer program product is provided according to an embodiment of the present disclosure, which includes a computer program carried on a non-transitory computer-readable medium, where the computer program includes a program code for executing the method shown in the flow chart. In such an embodiment, the computer program may be downloaded from the network by the communication apparatus 409 and installed, or installed from the storage apparatus 408, or installed from the ROM 402. When the computer program is executed by the processing apparatus 401, the above functions defined in the method according to the embodiment of the present disclosure are executed.

It should be noted that the above storage medium in the present disclosure may be a computer-readable signal medium or a computer-readable storage medium, or any combination of the two. The computer-readable storage medium may be, but not limited to, an electrical, magnetic, optical, electromagnetic, infrared, or semiconductor system, apparatus, or device, or a combination of any of the above. More specific examples of the computer-readable storage medium may include, but not limited to: an electrical connection with one or more wires, a portable computer disk, a hard disk, a random-access memory (RAM), a read-only memory (ROM), an erasable programmable read-only memory (EPROM or flash memory), optical fiber, a portable compact disk read-only memory (CD-ROM), an optical storage device, a magnetic storage device, or any suitable combination of the above. In the present disclosure, the computer-readable storage medium may be any tangible medium which includes or stores a program, and the program may be used by or in combination with an instruction execution system, apparatus, or device. In the present disclosure, the computer-readable signal medium may include a data signal propagated in a baseband or as part of a carrier wave, and a computer-readable program code is carried therein. This propagated data signal may be in many forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit the program for use by or in combination with the instruction execution system, apparatus, or device. The program code included on the storage medium may be transmitted by any suitable medium, including, but not limited to: a wire, an optical cable, RF (radio frequency), etc., or any suitable combination of the above.

In some embodiments, the client and the server can communicate with each other by using any currently known or future-developed network protocol, for example, an HTTP (Hyper Text Transfer Protocol), and can be interconnected with digital data communication of any form or any medium (for example, a communication network). Examples of the communication network include a local region network (LAN), a wide region network (WAN), an internet network (for example, the Internet), and an end-to-end network (for example, an ad hoc end-to-end network), and any currently known or future-developed network.

The above computer-readable storage medium may be included in the above electronic device, or may exist alone without being assembled into the electronic device.

The computer program code for executing the operations of the present disclosure may be written in one or more programming languages or a combination thereof. The above programming languages include, but not limited to, object-oriented programming languages, such as Java, Smalltalk and C++, and further include conventional procedural programming languages, such as "C" language or similar programming languages. The program code may be executed entirely on a user computer, partly on the user computer, as an independent software package, partly on the user computer and partly on a remote computer, or entirely on a remote computer or a server. In the case of relating a remote computer, the remote computer may be connected to the user computer through any type of network, including the LAN or WAN, or may be connected to an external computer (for example, may be connected through the Internet using an Internet service provider).

The flowcharts and block diagrams in the accompanying drawings of the present disclosure show the possible architecture, functions, and operations of the system, the method, and the computer program product to be implemented according to various embodiments of the present disclosure. In this regard, each block in the flowcharts or block diagrams can represent a module, a program segment or a part of codes, and the module, the program segment or the part of the codes includes one or more executable instructions for implementing the defined logical functions. It should also be noted that in some implementations as alternatives, the functions labeled in the blocks can occur in an order different from the order labeled in the accompanying drawings. For example, two sequentially shown blocks can be substantially executed in parallel in fact, and they sometimes can also be executed in a reverse order, depending on related functions. It should also be noted that each block in the block diagrams and/or the flowcharts and the combination of the blocks in the block diagrams and/or the flowcharts can be implemented by a dedicated system based on hardware for executing defined functions or operations, or can be implemented by a combination of the dedicated hardware and computer instructions.

The units described in the embodiments of the present disclosure may be implemented in a software fashion or may be implemented in a hardware fashion. The names of the units do not constitute a limitation to the units in some cases.

The functions described above herein may be performed, at least in part, by one or more hardware logic components. For example, non-restrictively, exemplary types of hardware logic components that can be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include, but not limited to, an electronic, magnetic, optical, electromagnetic, infrared or semiconductor system, apparatus or device, or any suitable combination of the foregoing. More specific examples of the machine-readable storage medium include an electrical connection based on one or more wires, a portable computer disk, a hard disk, a random-access memory (RAM), a read-only memory (ROM), an erasable programmable read-only memory (an EPROM or a flash memory), an optical fiber, a portable compact disk read-only memory (CD-ROM), an optical storage device, a magnetic storage device, or any suitable combination of the above content.

## Claims

1. A method for identifying an obstacle, implemented by an electronic device, the method comprising:
acquiring (S101) current identification feature information of the obstacle;
**characterized in that**, the method further comprises:
bypassing (S102) the obstacle to at least one position around the obstacle in response to determining that the current identification feature information does not satisfy an identification condition, and acquiring identification feature information of the obstacle at each of the at least one position correspondingly; and
determining (S103) a target type of the obstacle based on the identification feature information acquired at the at least one position,
wherein,
the identification feature information at least comprises an obstacle type; and
bypassing (S102) the obstacle to the at least one position around the obstacle in response to determining that the current identification feature information does not satisfy the identification condition comprises:
acquiring a current position of the obstacle;
acquiring a marked obstacle type corresponding to the current position by querying an environment map based on the current position; and
bypassing the obstacle to the at least one position around the obstacle in response to determining that the marked obstacle type does not match a current obstacle type,
wherein determining (S103) the target type of the obstacle based on the identification feature information acquired at the at least one position comprises:
acquiring a statistical value of each obstacle type by performing classification statistics on all obstacle types of the obstacle; and
determining an obstacle type corresponding to a maximum statistical value as the target type.

2. The method according to claim 1, wherein,
the identification feature information further comprises a confidence value of the obstacle type; and
bypassing (S102) the obstacle to the at least one position around the obstacle in response to determining that the current identification feature information does not satisfy the identification condition comprises:
bypassing the obstacle to the at least one position around the obstacle in response to determining that a confidence value of the current obstacle type is less than a preset confidence threshold.

3. The method according to claim 2, wherein determining (S103) the target type of the obstacle based on the identification feature information acquired at the at least one position comprises:
acquiring a first obstacle type with the confidence value greater than or equal to the preset confidence threshold by screening all confidence values of the obstacle;
acquiring a statistical value of each first obstacle type by performing classification statistics on all first obstacle types; and
determining a first obstacle type corresponding to a maximum statistical value as the target type.

4. The method according to any one of claims 1 to 3, wherein the method further comprises:
determining the marked obstacle type as misidentification information in response to determining that the marked obstacle type does not match the current obstacle type.

5. The method according to claim 4, further comprising:
collecting actual region information of the obstacle when bypassing the obstacle; and
transmitting the target type and the actual region information to the environment map.

6. An apparatus for identifying an obstacle, comprising:
an acquisition unit (301), configured to acquire current identification feature information of the obstacle;
**characterized in that**, the apparatus further comprises:
a bypassing unit (302), configured to bypass the obstacle to at least one position around the obstacle in response to determining that the current identification feature information does not satisfy an identification condition, and acquire identification feature information of the obstacle at each of the at least one position correspondingly; and
a determination unit (303), configured to determine a target type of the obstacle based on the identification feature information acquired at the at least one position,
wherein,
the identification feature information at least comprises an obstacle type; and
the bypassing unit (302) comprises:
a current position acquisition sub-unit, configured to acquire a current position of the obstacle;
a query sub-unit, configured to acquire a marked obstacle type corresponding to the current position by querying an environment map based on the current position; and
a first bypassing sub-unit, configured to bypass the obstacle to the at least one position around the obstacle in response to determining that the marked obstacle type does not match a current obstacle type,
wherein the determination unit (303) comprises:
a first statistical sub-unit, configured to acquire a statistical value of each obstacle type by performing classification statistics on all obstacle types of the obstacle; and
a first target type determination sub-unit, configured to determine an obstacle type corresponding to a maximum statistical value as the target type.

7. The apparatus according to claim 6, wherein
the identification feature information further comprises a confidence value of the obstacle type; and
the bypassing unit (302) comprises:
a second bypassing sub-unit, configured to bypass the obstacle to the at least one position around the obstacle in response to determining that a confidence value of the current obstacle type is less than a preset confidence threshold.

8. The apparatus according to claim 7, wherein the determination unit (303) comprises:
a screening sub-unit, configured to acquire a first obstacle type with the confidence value greater than or equal to the preset confidence threshold by screening all confidence values of the obstacle;
a second statistical sub-unit, configured to acquire a statistical value of each first obstacle type by performing classification statistics on all the first obstacle types; and
a second target type determination sub-unit, configured to determine the first obstacle type corresponding to a maximum statistical value as the target type.

9. The apparatus according to any one of claims 6 to 8, further comprising:
a marking unit configured, configured to determine the marked obstacle type as misidentification information in response to determining that the marked obstacle type does not match the current obstacle type.

10. The apparatus according to claim 9, further comprising:
a region information collection unit, configured to collect actual region information of the obstacle when bypassing the obstacle; and
a transmission unit, configured to transmit the target type and the actual region information to the environment map.

11. A computer-readable storage medium, storing a computer program thereon, wherein the program, when executed by a processor, implements the method according to any one of claims 1 to 5.

## Patentansprüche

1. Verfahren zum Identifizieren eines Hindernisses, das von einer elektronischen Vorrichtung umgesetzt wird, wobei das Verfahren umfasst:
Erfassen (S101) von aktuellen Identifizierungsmerkmalsinformationen des Hindernisses;
**dadurch gekennzeichnet, dass** das Verfahren ferner umfasst:
Umgehen (S102) des Hindernisses zu mindestens einer Position um das Hindernis herum als Reaktion auf das Bestimmen, dass die aktuellen Identifizierungsmerkmalsinformationen eine Identifizierungsbedingung nicht erfüllen, und entsprechendes Erfassen von Identifizierungsmerkmalsinformationen des Hindernisses an jeder der mindestens einen Positionen; und
Bestimmen (S103) eines Zieltyps des Hindernisses basierend auf den Identifizierungsmerkmalsinformationen, die an der mindestens einen Position erfasst werden,
wobei
die Identifizierungsmerkmalsinformationen mindestens einen Hindernistyp umfassen; und
das Umgehen (S102) des Hindernisses zu mindestens einer Position um das Hindernis herum als Reaktion auf das Bestimmen, dass die aktuellen Identifizierungsmerkmalsinformationen die Identifizierungsbedingung nicht erfüllen, umfasst:
Erfassen einer aktuellen Position des Hindernisses;
Erfassen eines markierten Hindernistyps, welcher der aktuellen Position entspricht, durch Abfragen einer Umgebungskarte auf Grundlage der aktuellen Position; und
Umgehen des Hindernisses zu mindestens einer Position um das Hindernis herum als Reaktion auf das Bestimmen, dass der markierte Hindernistyp nicht mit einem aktuellen Hindernistyp übereinstimmt,
wobei das Bestimmen (S103) des Zieltyps des Hindernisses basierend auf den Identifizierungsmerkmalsinformationen, die an der mindestens einen Position erfasst werden, umfasst:
Erfassen eines statistischen Wertes jedes Hindernistyps durch Durchführen einer Klassifikationsstatistik an allen Hindernistypen des Hindernisses; und
Bestimmen eines Hindernistyps, der einem maximalen statistischen Wert entspricht, als den Zieltyp.

2. Verfahren nach Anspruch 1, wobei
die Identifizierungsmerkmalsinformationen ferner einen Konfidenzwert des Hindernistyps umfassen; und
das Umgehen (S102) des Hindernisses zu mindestens einer Position um das Hindernis herum als Reaktion auf das Bestimmen, dass die aktuellen Identifizierungsmerkmalsinformationen die Identifizierungsbedingung nicht erfüllen, umfasst:
Umgehen des Hindernisses zu mindestens einer Position um das Hindernis herum als Reaktion auf das Bestimmen, dass ein Konfidenzwert des aktuellen Hindernistyps kleiner als eine voreingestellte Konfidenzschwelle ist.

3. Verfahren nach Anspruch 2, wobei das Bestimmen (S103) des Zieltyps des Hindernisses basierend auf den Identifizierungsmerkmalsinformationen, die an der mindestens einen Position erfasst werden, umfasst:
Erfassen eines ersten Hindernistyps, dessen Konfidenzwert größer oder gleich der voreingestellten Konfidenzschwelle ist, durch Vorauswählen aller Konfidenzwerte des Hindernisses;
Erfassen eines statistischen Wertes jedes ersten Hindernistyps durch Durchführen einer Klassifikationsstatistik an allen ersten Hindernistypen; und
Bestimmen eines ersten Hindernistyps, der einem maximalen statistischen Wert entspricht, als den Zieltyp.

4. Verfahren nach einem der Ansprüche 1 bis 3, wobei das Verfahren ferner umfasst:
Bestimmen des markierten Hindernistyps als Fehlidentifizierungsinformationen als Reaktion auf das Bestimmen, dass der markierte Hindernistyp nicht mit dem aktuellen Hindernistyp übereinstimmt.

5. Verfahren nach Anspruch 4, ferner umfassend:
Erheben von tatsächlichen regionalen Informationen des Hindernisses, wenn das Hindernis umgangen wird; und
Übertragen des Zieltyps und der tatsächlichen regionalen Informationen an die Umgebungskarte.

6. Gerät zum Identifizieren eines Hindernisses, umfassend:
eine Erfassungseinheit (301), die dazu konfiguriert ist, aktuelle Identifizierungsmerkmalsinformationen des Hindernisses zu erfassen;
**dadurch gekennzeichnet, dass** das Gerät ferner umfasst:
eine Umgehungseinheit (302), die dazu konfiguriert ist, das Hindernis zu mindestens einer Position um das Hindernis herum zu umgehen als Reaktion auf das Bestimmen, dass die aktuellen Identifizierungsmerkmalsinformationen eine Identifizierungsbedingung nicht erfüllen, und Identifizierungsmerkmalsinformationen des Hindernisses an jeder der mindestens einen Positionen entsprechend zu erfassen; und
eine Bestimmungseinheit (303), die dazu konfiguriert ist, einen Zieltyp des Hindernisses basierend auf den Identifizierungsmerkmalsinformationen, die an der mindestens einen Position erfasst werden, zu bestimmen,
wobei
die Identifizierungsmerkmalsinformationen mindestens einen Hindernistyp umfassen; und
die Umgehungseinheit (302) umfasst:
eine Teileinheit zum Erfassen einer aktuellen Position, die dazu konfiguriert ist, eine aktuelle Position des Hindernisses zu erfassen;
eine Abfrage-Teileinheit, die dazu konfiguriert ist, einen markierten Hindernistyp zu erfassen, welcher der aktuellen Position entspricht, durch Abfragen einer Umgebungskarte basierend auf der aktuellen Position; und
eine erste Umgehungsteileinheit, die dazu konfiguriert ist, zu mindestens einer Position um das Hindernis herum zu umgehen als Reaktion auf das Bestimmen, dass der markierte Hindernistyp nicht mit dem aktuellen Hindernistyp übereinstimmt,
wobei die Bestimmungseinheit (303) umfasst:
eine erste statistische Teileinheit, die dazu konfiguriert ist, einen statistischen Wert jedes Hindernistyps durch Durchführen einer Klassifikationsstatistik an allen Hindernistypen des Hindernisses zu erfassen; und
eine erste Teileinheit zum Bestimmen eines Zieltyps, die dazu konfiguriert ist, einen Hindernistyp, der einem maximalen statistischen Wert entspricht, als den Zieltyp zu bestimmen.

7. Gerät nach Anspruch 6, wobei
die Identifizierungsmerkmalsinformationen ferner einen Konfidenzwert des Hindernistyps umfassen; und
die Umgehungseinheit (302) umfasst:
eine zweite Umgehungsteileinheit, die dazu konfiguriert ist, das Hindernis zu mindestens einer Position um das Hindernis herum zu umgehen als Reaktion auf das Bestimmen, dass ein Konfidenzwert des aktuellen Hindernistyps kleiner als eine voreingestellte Konfidenzschwelle ist.

8. Gerät nach Anspruch 7, wobei die Bestimmungseinheit (303) umfasst:
eine Vorauswahlteileinheit, die dazu konfiguriert ist, einen ersten Hindernistyp, dessen Konfidenzwert größer oder gleich der voreingestellten Konfidenzschwelle ist, durch Vorauswählen aller Konfidenzwerte des Hindernisses zu erfassen;
eine zweite statistische Teileinheit, die dazu konfiguriert ist, einen statistischen Wert jedes ersten Hindernistyps zu erfassen, indem sie eine Klassifikationsstatistik über alle ersten Hindernistypen durchführt; und
eine zweite Teileinheit zum Bestimmen eines Zieltyps, die dazu konfiguriert ist, den ersten Hindernistyp, der einem maximalen statistischen Wert entspricht, als den Zieltyp zu bestimmen.

9. Gerät nach einem der Ansprüche 6 bis 8, ferner umfassend:
eine Markierungseinheit, die dazu konfiguriert ist, den markierten Hindernistyp als Fehlidentifizierungsinformationen zu bestimmen als Reaktion auf das Bestimmen, dass der markierte Hindernistyp nicht mit dem aktuellen Hindernistyp übereinstimmt.

10. Gerät nach Anspruch 9, ferner umfassend:
eine Einheit zum Erheben von regionalen Informationen, die dazu konfiguriert ist, tatsächliche Bereichsinformationen des Hindernisses zu erheben, wenn das Hindernis umgangen wird; und
eine Übertragungseinheit, die dazu konfiguriert ist, den Zieltyp und die tatsächliche Bereichsinformationen an die Umgebungskarte zu übertragen.

11. Computerlesbares Speichermedium, auf dem ein Computerprogramm gespeichert ist, wobei das Programm, wenn es von einem Prozessor ausgeführt wird, das Verfahren nach einem der Ansprüche 1 bis 5 umsetzt.

## Revendications

1. Procédé pour identifier un obstacle, mis en œuvre par un dispositif électronique, le procédé comprenant :
l'acquisition (S101) d'informations de caractéristique d'identification actuelles de l'obstacle ;
**caractérisé en ce que** le procédé comprend en outre :
le contournement (S102) de l'obstacle vers au moins une position autour de l'obstacle lorsqu'il est déterminé que les informations de caractéristique d'identification actuelles ne satisfont pas à une condition d'identification, et l'acquisition en conséquence d'informations de caractéristique d'identification de l'obstacle à chacune de la ou des positions ; et
la détermination (S103) d'un type cible de l'obstacle sur la base des informations de caractéristique d'identification acquises à l'au moins une position,
dans lequel,
les informations de caractéristique d'identification au moins comprennent un type d'obstacle ; et
le contournement (S102) de l'obstacle vers l'au moins une position autour de l'obstacle lorsqu'il est déterminé que les informations de caractéristique d'identification actuelles ne satisfont pas à la condition d'identification comprend :
l'acquisition d'une position actuelle de l'obstacle ;
l'acquisition d'un type d'obstacle marqué correspondant à la position actuelle en interrogeant une carte d'environnement sur la base de la position actuelle ; et
le contournement de l'obstacle vers l'au moins une position autour de l'obstacle lorsqu'il est déterminé que le type d'obstacle marqué ne concorde pas avec un type d'obstacle actuel,
dans lequel la détermination (S103) du type cible de l'obstacle sur la base des informations de caractéristique d'identification acquises à l'au moins une position comprend :
l'acquisition d'une valeur statistique de chaque type d'obstacle en effectuant des statistiques de classification sur tous les types d'obstacle de l'obstacle ; et
la détermination d'un type d'obstacle correspondant à une valeur statistique maximale comme type cible.

2. Procédé selon la revendication 1, dans lequel,
les informations de caractéristique d'identification comprennent en outre une valeur de confiance du type d'obstacle ; et
le contournement (S102) de l'obstacle vers l'au moins une position autour de l'obstacle lorsqu'il est déterminé que les informations de caractéristique d'identification actuelles ne satisfont pas à la condition d'identification comprend :
le contournement de l'obstacle vers l'au moins une position autour de l'obstacle lorsqu'il est déterminé qu'une valeur de confiance du type d'obstacle actuel est inférieure à un seuil de confiance prédéfini.

3. Procédé selon la revendication 2, dans lequel la détermination (S103) du type cible de l'obstacle sur la base des informations de caractéristique d'identification acquises à l'au moins une position comprend :
l'acquisition d'un premier type d'obstacle dont la valeur de confiance est supérieure ou égale au seuil de confiance prédéfini en examinant toutes les valeurs de confiance de l'obstacle ;
l'acquisition d'une valeur statistique de chaque premier type d'obstacle en effectuant des statistiques de classification sur tous les premiers types d'obstacle ; et
la détermination d'un premier type d'obstacle correspondant à une valeur statistique maximale comme type cible.

4. Procédé selon l'une des revendications 1 à 3, dans lequel le procédé comprend en outre :
la détermination du type d'obstacle marqué comme informations d'erreur d'identification lorsqu'il est déterminé que le type d'obstacle marqué ne concorde pas avec le type d'obstacle actuel.

5. Procédé selon la revendication 4, comprenant en outre :
la collecte d'informations de région actuelles de l'obstacle lors du contournement de l'obstacle ; et
la transmission du type cible et des informations de région actuelles à la carte d'environnement.

6. Appareil pour identifier un obstacle, comprenant :
une unité d'acquisition (301) configurée pour acquérir des informations de caractéristique d'identification actuelles de l'obstacle ;
**caractérisé en ce que** l'appareil comprend en outre :
une unité de contournement (302) configurée pour contourner l'obstacle vers au moins une position autour de l'obstacle lorsqu'il est déterminé que les informations de caractéristique d'identification actuelles ne satisfont pas à une condition d'identification, et acquérir en conséquence des informations de caractéristique d'identification de l'obstacle à chacune de la ou des positions ; et
une unité de détermination (303) configurée pour déterminer un type cible de l'obstacle sur la base des informations de caractéristique d'identification acquises à l'au moins une position,
dans lequel,
les informations de caractéristique d'identification au moins comprennent un type d'obstacle ; et
l'unité de contournement (302) comprend :
une sous-unité d'acquisition de position actuelle configurée pour acquérir une position actuelle de l'obstacle ;
une sous-unité d'interrogation configurée pour acquérir un type d'obstacle marqué correspondant à la position actuelle en interrogeant une carte d'environnement sur la base de la position actuelle ; et
une première sous-unité de contournement configurée pour contourner l'obstacle vers l'au moins une position autour de l'obstacle lorsqu'il est déterminé que le type d'obstacle marqué ne concorde pas avec un type d'obstacle actuel,
dans lequel l'unité de détermination (303) comprend :
une première sous-unité statistique configurée pour acquérir une valeur statistique de chaque type d'obstacle en effectuant des statistiques de classification sur tous les types d'obstacle de l'obstacle ; et
une première sous-unité de détermination de type cible configurée pour déterminer un type d'obstacle correspondant à une valeur statistique maximale comme type cible.

7. Appareil selon la revendication 6, dans lequel
les informations de caractéristique d'identification comprennent en outre une valeur de confiance du type d'obstacle ; et
l'unité de contournement (302) comprend :
une deuxième sous-unité de contournement configurée pour contourner l'obstacle vers l'au moins une position autour de l'obstacle lorsqu'il est déterminé qu'une valeur de confiance du type d'obstacle actuel est inférieure à un seuil de confiance prédéfini.

8. Appareil selon la revendication 7, dans lequel l'unité de détermination (303) comprend :
une sous-unité d'examen configurée pour acquérir un premier type d'obstacle dont la valeur de confiance est supérieure ou égale au seuil de confiance prédéfini en examinant toutes les valeurs de confiance de l'obstacle ;
une deuxième sous-unité statistique configurée pour acquérir une valeur statistique de chaque premier type d'obstacle en effectuant des statistiques de classification sur tous les premiers types d'obstacle ; et
une deuxième sous-unité de détermination de type cible configurée pour déterminer le premier type d'obstacle correspondant à une valeur statistique maximale comme type cible.

9. Appareil selon l'une des revendications 6 à 8, comprenant en outre :
une unité de marquage configurée pour déterminer le type d'obstacle marqué comme informations d'erreur d'identification lorsqu'il est déterminé que le type d'obstacle marqué ne concorde pas avec le type d'obstacle actuel.

10. Appareil selon la revendication 9, comprenant en outre :
une unité de collecte d'informations de région configurée pour collecter des informations de région actuelles de l'obstacle lors du contournement de l'obstacle ; et
une unité de transmission configurée pour transmettre le type cible et les informations de région actuelles à la carte d'environnement.

11. Support de stockage lisible par ordinateur sur lequel est stocké un programme informatique, dans lequel le programme, lorsqu'il est exécuté par un processeur, met en œuvre le procédé selon l'une des revendications 1 à 5.
